# EUROPÄISCHE PATENTSCHRIFT

(11) **EP 2 563 153 B1**
(45) Veröffentlichungstag und Bekanntmachung des Hinweises auf die Patenterteilung: **03.01.2018**
(21) Anmeldenummer: 11711561.8
(22) Anmeldetag: 31.03.2011
(51) Int. Cl.: A22C 17/00, B65B 25/06

(54) **VERFAHREN ZUM BEVORZUGT KONTINUIERLICHEN VERPACKEN VON PRODUKTEN**
METHOD FOR PREFERENTIAL CONTINUOUS PACKING OF PRODUCTS
PROCÉDÉ POUR L'EMBALLAGE PREFERENTIEL EN CONTINU DE PRODUITS

(30) Priorität: 13.09.2010 DE 102010045192; 27.04.2010 DE 102010018435
(43) Veröffentlichungstag der Anmeldung: 06.03.2013
(73) Patentinhaber: Triton GmbH, 14089 Berlin (DE); Deutsches Institut für Lebensmitteltechnik e.V., 49610 Quakenbrück (DE); Mondi Consumer Packaging Technologies GmbH, 48599 Gronau (DE)
(72) Erfinder: KORTSCHACK, Fritz, 14089 Berlin (DE); HEINZ, Volker, 49610 Quakenbrück (DE); TÖPFL, Stefan, 49080 Osnabrück (DE); HUKELMANN, Bernhard, 49610 Quakenbrück (DE); BADER, Herbert, 48356 Nordwalde (DE); NIEPELT, Ralf, 48599 Gronau-Epe (DE)
(74) Vertreter: Kruspig, Volkmar
(86) Internationale Anmeldenummer: PCT/EP2011/054984
(87) Internationale Veröffentlichungsnummer: WO 2011/134735

(56) Entgegenhaltungen:
- DE-A1- 3 911 463
- DE-U1-202005 015 901

## Beschreibung

Die Erfindung betrifft ein Verfahren zum bevorzugt kontinuierlichen Verpacken von Produkten, insbesondere Lebensmittel, mit oder ohne bereits stabilisierter Eigenform wie Fleisch- und Wurstwaren, Wurstbrät oder dergleichen Produkte durch allseitiges Umhüllen mit einer ein- oder mehrschichtigen, vom Band zuführbaren Folie gemäß Oberbegriff des Patentanspruchs 1.

Aus der WO 2005/099465 A1 ist, ein Verfahren zur Oberflächenbehandlung, gleichzeitigem Portionieren und Formen sowie Haltbarmachen von Lebensmitteln wie Fleisch- und Wurstwaren oder dergleichen Produkte vorbekannt.

Gemäß der dortigen Lehre erfolgt zunächst ein Verdichten des Produkts zwischen zwei formgebenden, mindestens teilweise strukturierten Platten. Danach wird ein Trennen des Produkts in Formabschnitte vorgenommen, und zwar durch mechanisches Inkontaktkommen entsprechender Bereiche der formgebenden Platten. Im Anschluss erfolgt ein gezieltes, dosiertes Erhitzen des Produkts, vorzugsweise über die formgebenden Platten zur Ausbildung einer einen verringerten a_{w}-Wert aufweisenden Eigenhaut auf der Oberfläche des Produkts, welche sowohl produktformstabilisierende als auch keimreduzierende Eigenschaften aufweist. Im Anschluss wird das Produkt in Hüllen verpackt, wobei eine gleichzeitige Keimreduzierung des Hüll- oder Darmmaterials durch Hitzeeinwirkung erfolgt.

Aus der DE 198 07 794 C2 ist ein Verfahren zur Herstellung und zur Formgebung von Lebensmitteln, wie z. B. Fleisch- und Wurstwaren vorbekannt, wobei die Lebensmittel zum Schutz gegen Rekontamination vor der endgültigen Haltbarmachung mit Folien umhüllt werden.
Bei dem Verfahren zur kontinuierlichen Herstellung von Würsten gemäß US 6,135,869 kommen Ober- und Unterfolien zum Einsatz, die einer Vorformung unterliegen. Die Formgebung erfolgt durch strukturierte Walzen.

Bei dem Verfahren zur Herstellung von Schinkenprodukten nach DE 198 59 830 Al wird von einer einseitig offenen Form ausgegangen, d.h. von einer Form, die aus einem endseitig verschlossenen, oben offenen und mit gerundetem Boden versehenen Trog besteht. Nach dem Auffüllen der Form durch Aufpressen von gespritzten und massierten Fleischstücken wird die gefüllte Form mit einem auf der Füllmasse aufliegenden Deckel abgedeckt und es erfolgt ein Vakuumieren. Nach Rückkehr zu normalen Druckbedingungen wird ein Garen der Füllmasse vorgenommen mit dem anschließenden Ausformen des entsprechend gegarten Schinkenprodukts.

Ein Verpackungsverfahren zur Herstellung von Mehrlagenfolienverpackungen ist auch aus dem Dokument DE 20 2005 015 901 U1 bekannt. Bekannt sind darüber hinaus Tiefziehtechniken, auch unter Verwendung von Tiefziehfolien. Diese Folien bestehen üblicherweise aus mehreren Schichten. Eine von einer Rolle abgespulte Unterfolie wird erwärmt und geformt. Die geformten Packungen werden dann weiter transportiert und im Einlegebereich befüllt. Eine ebenfalls von der Rolle abgespulte Oberfolie dient dann der Versiegelung der geformten und befüllten Verpackungen. In der Siegelstation wird die Packung vakuumiert und gegebenenfalls durch modifizierte Atmosphäre ausgetauscht. Hitze und Druck versiegeln die Ober- mit der Unterfolie. Nach dem Längs- und Querschneiden der Packung stehen die fertigen Packungen zum Abtransport bereit.
Den zitierten Verfahren des Standes der Technik ist der Nachteil gemein, dass das Ausformen der Verpackungen mit anschließendem Befüllen nur diskontinuierlich, d.h. taktweise möglich ist mit der Folge einer reduzierten Produktivität.
Das Einfüllen von z.B. Wurstbrät in vorgeformte Verpackungen hat darüber hinaus den Nachteil, dass eine vollständige Füllung mit dem Ziel des Vermeidens von Lufteinschlüssen zeitaufwendig ist und damit ebenfalls Einschränkungen in der Produktivität gegeben sind.
Aus dem Vorgenannten ist es daher Aufgabe der Erfindung, ein weiterentwickeltes Verfahren zum bevorzugt kontinuierlichen Verpacken von Produkten, insbesondere Lebensmitteln mit oder ohne bereits stabilisierter Eigenform wie Fleisch- und Wurstwaren, Wurstbrät oder dergleichen Produkte anzugeben, welches unerwünschte Lufteinschlüsse vermeidet und das bei seiner Anwendung eine hohe Produktivität ermöglicht.
Die Lösung der Aufgabe der Erfindung erfolgt durch ein Verfahren gemäß der Lehre nach Patentanspruch 1, wobei die Unteransprüche mindestens zweckmäßige Ausgestaltungen und Weiterbildungen darstellen.

Es wird demnach beim Verfahren zum bevorzugt kontinuierlichen Verpacken von Produkten, insbesondere Lebensmitteln, mit oder ohne bereits stabilisierter Eigenform, wie Fleisch- und Wurstwaren, Wurstbrät oder dergleichen Produkte ausgegangen, das von einem allseitigen Umhüllen mit ein- oder mehrschichtigen, vom Band zuführbaren Folien getragen ist.

Demnach wird erfindungsgemäß eine flexible, ohne Wärmeeinwirkung verformbare, selbstrückstellende Folie bevorzugt als Unterfolie eingesetzt, wobei bevorzugt die Unterfolie durch Druckeinwirkung temporär verformt wird, um eine Mulde zur Produktaufnahme auszubilden.

Diese Folie wird beispielsweise in einer Dicke von 20-300µm, bevorzugt 50-150µm, zur Verfügung gestellt, wobei das Rückstellverhalten der Folie dadurch gekennzeichnet ist, dass sich nach Dehnung um wenigstens 100% eine bleibende Deformation von 60% und weniger einstellt. Geeignete Rohstoffe zur Herstellung einer solchen Folie finden sich in den Gruppen der Styrolblockcopolymere wie z.B. Styrol-Butadien-Styrol-Coplymer (SBS), Styrol-Isopren-Styrol-Block-Coplymer (SIS), Styrol-Ethylen-Buten-Coplymer (SEBS), sonstigen thermoplastischen Styrolelastomeren (TPE-S), elastischem Polyolefin-Coplymer, thermoplastischen Polyolefinelastomeren (TPE-O), thermoplstischen Polyurethanelastomeren (TPE-U), thermoplstischen Polyamidelastomeren (TPE-A), thermoplastischen Polyesterelastomeren (TPE-E) oder einer Mischung dieser Polymere. Eine solche Folie kann sowohl als Monofolie als auch als Mehrschicht- oder Coextrusionsfolie ausgebildet sein.

In geeigneten Weiterbildungen können neben den Rückstelleigenschaften auch weitergehende Eigenschaften integriert werden wie z.B. Barriereeigenschaften gegenüber Gasen, Dämpfen oder Aromen. Geeignete Rohstoffe hierfür sind z.B. Polyamide, Ethylenvinylalkohol (EVOH), Polyvinylchlorid (PVC), Polyvinylidenchlorid (PVdC) oder vergleichbare Substanzen, die idealerweise in eine Schicht der oben beschriebenen Mehrschicht- oder Coextrusionsfolien eingebracht werden. Die gleichen oder ähnliche Folieneigenschaften kann auch die Oberfolie aufweisen, auch diese Folie kann temporär verformt werden.

Das jeweilige Produkt wird dann gegebenenfalls portioniert in die Mulde eingebracht und dort fixiert, wobei das Fixieren durch eine Ober- oder Deckelfolie, gegebenenfalls unterstützt durch einen Niederhalter erfolgt.

Mit dem Aufheben der Druckeinwirkung übt dann die flexible Folie ihren Rückstellvorgang aus und umschließt hierbei das Produkt mindestens teilweise derart, dass unerwünschte Lufteinschlüsse durch Herausdrücken von Lufteinschlüssen entfernt werden. Anschließend erfolgt eine Versiegelung zwischen Ober- und Unterfolie. Bei der vorstehenden Erläuterung wird davon ausgegangen, dass zumindest die Unterfolie selbstrückstellende Eigenschaften aufweist. Selbstverständlich kann in quasi kinematischer Umkehr auch die Oberfolie oder Unter- und Oberfolie derartige selbstrückstellende Eigenschaften besitzen.
Das Rückstellen kann durch das Anlegen eines Vakuums unterstützt werden.
Die Deck- bzw. Oberfolie kann zum Zweck der Entlüftung in einem ersten Schritt durch Heftung und in einem zweiten Schritt vollständig und dicht mit der Unterfolie verbunden werden. Die Oberfolie und/oder Unterfolie kann bei einer Ausführungsform eine Perforation besitzen.
Nach oder während des Entlüftungsvorgangs kann ein Spül- und/oder Füllvorgang mit einem Schutzgas erfolgen.
Die Druckeinwirkung zur temporären Verformung, um die Mulde zur Produktaufnahme zu schaffen, erfolgt bevorzugt durch Erzeugen eines Unterdrucks an die Unterseite der Unterfolie, es ist jedoch auch möglich, analog zu der vorhergehenden Beschreibung und/oder ausschließlich eine Verformung der Oberfolie zu bewerkstelligen.
Die Unterdruckerzeugung kann durch eine gezielte Druckgaszuführung auf die dem Produkt zugewandten Seite der Folie unterstützt werden, sodass sich eine verbesserte Formbildung ergibt.
Der Spül- und/oder Füllvorgang kann durch Anlegen eines Vakuums im Folienaußenbereich der temporären Verformung beschleunigt werden.
Bei einer weiteren erfindungsgemäßen Variante wird davon ausgegangen, dass das zu verpackende Produkt auf einer relativ starren Platte, Tray oder einem Träger abgelegt und durch eine ohne Wärmeeinwirkung verformbare, selbstrückstellende Folie, die in diesem Fall als Oberfolie anzusehen ist, umhüllt wird. Die Obefolie kann analog zum bereits benannten Verschweißen von Ober- und Unterfolien, vollständig und dicht mit der starren Platte, Tray oder einem Träger verbunden werden. Dabei kann der Umhüllvorgang durch Unterdruckeinwirkung optimiert werden. Auch ist der Umhüllvorgang unter Schutzgasatmosphäre realisierbar.

Aus Vorstehendem wird deutlich, dass nicht zwingend allein die Unterfolie durch Druckeinwirkung temporär zu verformen ist, sondern dass ebenso bei einer festen oder starren Unterfolie oder einem sogenannten Tray eine verformbare, selbstrückstellende Oberfolie oder Deckelfolie zur Anwendung kommen kann.

Zur direkten oder indirekten elektrischen Erwärmung der in der temporären Verformung aufgenommenen Produkte weist mindestens eine der eingesetzten Folien geeignete Mittel auf. Diese Mittel können von den Folien umschlossene Außenkontakte sein.

Die Möglichkeit der direkten oder indirekten elektrischen Erwärmung in einer Verpackung, einem Darm oder dergleichen Mittel aufgenommenen Produkte kann unabhängig von der hier beschriebenen Verwendung einer speziellen selbst zurückstellenden Folie genutzt werden. So ist beispielsweise denkbar, für das Erwärmen und Pasteurisieren von Aufschnitt metallische Kappen vorzusehen, die das betreffene Produkte kontaktieren und eine Stromleitung und Erwärmung durch das Produktvolumen hindurch realisieren. Eine Erhitzung des entsprechenden Produkts und zu behandelnden Gutes kann auch durch durchgängige, z.B. streifenförmige Kontakte, die in der Verpackung befindlich sind oder entlang einer Siegelnaht verlaufen, erfolgen.

Bei einer weiteren Ausführungsform sind auf bzw. in mindestens einer der Folien Kontakte vorhanden, die stromleitend sind, und einen direkten elektrischen Kontakt zum Produkt schaffen, um die gewünschte Erwärmung durchzuführen. Auch das Vorsehen von Festkontakten zur gezielten Erwärmung oder zum Pasteurisieren auf elektrischer Basis liegt im Sinne der Erfindung.

Die in der Verformung jeweils befindlichen Produkte können widerstandserhitzt und/oder hochfrequenzerhitzt werden, wobei der Schritt der Erhitzung sowohl unmittelbar nach der Verpackung als auch vor der späteren Produktentnahme, d.h. beim Verbraucher durchführbar ist. Dadurch, dass bereits bei der Verpackung eine flexible Folie verwendet wird, ist eine Ausdehnung des Produkts bei der Erwärmung vor dem Verbrauch bzw. dem Verzehr unproblematisch.

Während der Wärmebehandlung kann eine Stützform eingesetzt werden.

Die temporäre Verformung zur Muldenbildung wird durch bezogen auf das Unterfolienband mitlaufende Unterdruckformen realisiert.

Es liegt im Sinne der Erfindung, eine kontinuierliche, aktive Absaugung von Lufteinschlüssen aus den befüllten Packungen unmittelbar vor deren Verschließen oder der Wiederbefüllung mit einem Schutzgas durchzuführen.

Diese Absaugung kann über die im Siegelbereich perforierte Folie der bis dahin nur gehefteten Folien oder aber auch über Absaugöffnungen in einer Abdeckplatte bzw. Abdeckvorrichtung vorgenommen werden. Die Abdeckvorrichtung ist hierbei so ausgebildet, dass die Folien an ihr entlang gleiten können, ohne dass eine Beschädigung des Folienmaterials gegeben ist.

Damit ein Verzug der Folien während des Gleitens unterhalb der vorerwähnten Abeckvorrichtung mit Absaugung verhindert wird, besteht die Möglichkeit, die Folienränder der befüllten Mulden durch eine umlaufend ansaugende Unterdruckeinrichtung zu fixieren.

Die Erfindung soll anhand eines Ausführungsbeispiels wie nachstehend beschrieben näher erläutert werden.

Bei dem erfindungsgemäßen Verfahren kommt eine flexible Folie zum Einsatz, die ohne Wärmeeinfluss eine hohe Dehnfähigkeit aufweist und über hohe Rückstellkräfte verfügt.

Dieses Folienmaterial lässt sich durch Druck bzw. Unterdruck ähnlich einer Membran verformen, wobei die Verformung sich wieder rückstellt, d.h. aufgehoben wird, sobald die Einwirkkraft entfällt.

Wenn durch Unterdruck eine Ausmuldung in dem Folienmaterial erzeugt wurde, wird das zugeführte Produkt in diese Mulde verbracht. Die Folie schmiegt sich nach Aufhebung des Unterdrucks an das zu verpackende Gut an, wobei hier das in der Mulde befindliche Gut durch Druck, z.B. durch eine verbundene Oberfolie und/oder einen oberhalb der Oberfolie angebrachten Niederhalter in der Ausformung gehalten wird.

Leichtes Packgut wie z.B. pastöse Massen, nicht oder nur gering gegarte Brühwurst oder Bratwurst kann in der ausgeformten Unterfolie durch eine Deckfolie gehalten werden. Unerwünscht eingeschlossene Luft kann durch Perforationslöcher oder Perforationsschlitze, die sich z.B. in dem Siegelbereich der Folie befinden, entweichen, wobei hier die Oberfolie in einem ersten Siegelvorgang zunächst einer Heftung bezogen auf die Unterfolie unterliegt und hierbei noch nicht alle Öffnungen im Bereich der Siegelzone endgültig verschlossen sind.

Durch die Rückstellkraft der Unter-/Oberfolie wird das eingefüllte Gut in der Packung gleichmäßig verteilt und es erfolgt ein Herausdrücken von Lufteinschlüssen.

Ebenfalls ist es gemäß dem Ausführungsbeispiel möglich, die Entfernung der Lufteinschlüsse durch aktives Absaugen über die Perforationsöffnungen zu unterstützen. Jeweils ist sinnvoll, das Vakuum, welches die ursprüngliche Mulde zur Aufnahme des Packguts erzeugt hat, während dieses Schritts der Entfernung von Lufteinschlüssen aufzuheben. In einer anschließenden Komplettsiegelung werden alle noch vorhandenen Öffnungen dauerhaft verschlossen.

Waren, die in einer möglichst sauerstoffarmen Umgebung aufzubewahren sind, werden vor der Siegelung durch aktives Absaugen und gegebenenfalls Einbringen eines sauerstofffreien Füllgases präpariert.

Bei einer Variante der Verfahrensführung erfolgt die Absaugung zielgerichtet unmittelbar vor dem Siegelvorgang der Ober- mit der Unterfolie, d.h. nicht über die im Siegelbereich perforierte Folie.

Erfindungsgemäß besteht auch die Möglichkeit, Packungen zu erstellen, die zur Haltbarkeitsverlängerung des Packguts oder aber auch zur Packungsgestaltung ein Gaspolster aufweisen. Hierfür wird unmittelbar vor dem Versiegeln ein Gas in die Packung eingebracht, wobei es zweckmäßig ist, parallel mit dem Einströmen dieses Gases erneut Unterdruck an die Unterfolie anzulegen. Beispielhaft zeigen die Fig. 1 und 2 das mechanische Verhalten aus einer Hysteresemessung des bevorzugt eingesetzten Folienmaterials.

Produkte, die durch Hochdruck oder Wärmeeinwirkung haltbar gemacht werden, können in der verschlossenen Packung weiterbehandelt werden, da durch die flexiblen Eigenschaften der Folie eine Ausdehnung oder Komprimierung, insbesondere bei einer Hochdruckbehandlung des Produkts bei der Behandlung ohne Beschädigung des Folienmaterials erfolgen kann.

Eine Wärmebehandlung der Produkte kann durch Anlegen eines elektrischen Feldes oder durch Bestromung erfolgen, wobei hierfür die Folien eine leitfähige Beschichtung mit entsprechenden Kontaktbereichen aufweisen. Auch besteht die Möglichkeit, leitfähige Materialien in die Siegelnaht der Packung einzubetten. Vorhandene Kontakte können auch zu einem späteren Zeitpunkt genutzt werden, um den Verpackungsinhalt vor dem Verzehr zu erwärmen.

Die vorgestellte Verpackungstechnik hat den Vorteil, dass keine getakteten Prozesse erforderlich sind, da alle Arbeitsschritte kontinuierlich ausgeführt werden.

Durch eine permanente Siegelung, mitlaufenden Unterdruckformen zur Erzeugung der Mulden zur Aufnahme des Produkts und die Zuführung der Oberfolie kann quasi parallel mit der Ausformung die Befüllung mit dem zu verpackenden Produkt vorgenommen werden.

Nach Abschluss des Verpackungsvorgangs erfolgt ein an sich bekanntes Vereinzeln der Packungen, gegebenenfalls verbunden mit einem Etikettieren oder das Verbringen in einen Versandkarton oder dergleichen.

## Patentansprüche

1. Verfahren zum kontinuierlichen Verpacken von Produkten, insbesondere Lebensmitteln mit oder ohne bereits stabilisierter Eigenform wie Fleisch- und Wurstwaren, Wurstbrät oder dergleichen Produkte durch allseitiges Umhüllen mit ein- oder mehrschichtigen, vom Band zuführbaren Folien, wobei
- flexible, ohne Wärmeeinwirkung verformbare, selbstrückstellende Folien als Unter- und/oder Oberfolie eingesetzt werden, wobei mindestens eine der Folien durch Druckeinwirkung temporär verformt wird, um eine Mulde zur Produktaufnahme auszubilden,
- das jeweilige Produkt portioniert in die Mulde eingebracht und dort fixiert wird, wobei das Fixieren durch die zugehörige Ober- oder Deckelfolie erfolgt,
- mit dem Aufheben der Druckeinwirkung die jeweilige Folie ihren Rückstellvorgang ausübt und hierbei das Produkt mindestens teilweise umschließt, derart, dass unerwünschte Lufteinschlüsse durch Herausdrücken von Lufteinschlüssen entfernt werden sowie anschließend
- eine Versiegelung zwischen Ober- und Unterfolie vorgenommen wird.

2. Verfahren nach Anspruch 1,
**dadurch gekennzeichnet, dass**
die Oberfolie zum Zweck der Entlüftung in einem ersten Schritt durch Heftung und in einem zweiten Schritt vollständig und dicht mit der Unterfolie verbunden wird.

3. Verfahren nach Anspruch 1 oder 2,
**dadurch gekennzeichnet, dass**
nach oder während des Entlüftungsvorgangs ein Spül- und/oder Füllvorgang mit einem Schutzgas erfolgt.

4. Verfahren nach einem der vorangegangenen Ansprüche,
**dadurch gekennzeichnet, dass**
die Druckeinwirkung durch Erzeugen eines Unterdrucks an die Außenseite der Unterfolie realisiert wird.

5. Verfahren nach Anspruch 4,
**dadurch gekennzeichnet, dass**
die Unterdruckerzeugung durch eine gezielte Druckgaszuführung auf die Innenseite der Folie und damit die Formbildung unterstützt wird.

6. Verfahren nach Anspruch 3,
**dadurch gekennzeichnet, dass**
der Spül- und/oder Füllvorgang durch Anlegen eines Vakuums im Bereich der temporären Verformung beschleunigt wird.

7. Verfahren nach einem der vorangegangenen Ansprüche,
**dadurch gekennzeichnet, dass**
mindestens an oder in einer der eingesetzten Folien Mittel zur direkten oder indirekten elektrischen Erwärmung der in der temporären Verformung aufgenommenen Produkte vorhanden sein.

8. Verfahren nach Anspruch 7,
**dadurch gekennzeichnet, dass**
die in der Verformung jeweils befindlichen Produkte widerstandserhitzt und/oder hochfrequenzerhitzt werden, wobei der Schritt der Erhitzung sowohl unmittelbar nach der Verpackung als auch vor der späteren Produktentnahme durchführbar ist.

9. Verfahren nach Anspruch 7 oder 8,
**dadurch gekennzeichnet, dass**
während der Wärmebehandlung eine Stützform eingesetzt wird.

10. Verfahren nach einem der vorangegangenen Ansprüche,
**dadurch gekennzeichnet, dass**
die temporäre Verformung zur Muldenbildung durch bezogen auf das Folienband mitlaufende Unterdruckformen realisiert wird.

11. Verfahren nach einem der vorangegangenen Ansprüche,
**dadurch gekennzeichnet, dass**
die eingesetzte Ober- und/oder Deckelfolie aus einem flexiblen, insbesondere einem der Unterfolge analogen oder ähnlichen Material besteht.

12. Verfahren nach Anspruch 7 oder 8,
**dadurch gekennzeichnet, dass**
die Mittel zur Erwärmung Kontakte im Bereich der Siegelnaht umfassen.

## Claims

1. Method for the continuous packaging of products, in particular foodstuffs with or without an already stabilized inherent shape such as meat and sausage products, sausage meat emulsion or similar products, by encasing them on all sides with single-layer or multi-layer films that can be fed from a web,
wherein
- flexible films are used as the lower film or the upper film, which are deformable without the influence of heat and are self-restoring, wherein at least one of the films is temporarily deformed by the influence of pressure in order to form a trough for receiving a product,
- the respective product is introduced in portions into the trough and fixed there, the fixing being accomplished by the associated upper or cover film,
- as soon as the pressure influence stops, the respective film performs its restoring process, thereby enclosing the product at least partially in such a way that undesired air inclusions are removed, and subsequently
- sealing between the upper film and the lower film is performed.

2. Method according to claim 1,
**characterized in that**
for deaeration purposes, the upper film is connected to the lower film section-wise by sewing in a first step, and completely and tightly in a second step.

3. Method according to claim 1 or 2,
**characterized in that**
a rinsing and/or filling process with a protective gas is carried out after or during the deaeration process.

4. Method according to any one of the preceding claims,
**characterized in that**
the pressure influence is realized by generating a negative pressure at the outer side of the lower film.

5. Method according to claim 4,
**characterized in that**
the generation of the negative pressure and thus the shaping is supported by a selective pressure gas supply to the inner side of the film.

6. Method according to claim 3,
**characterized in that**
the rinsing and/or filling process is accelerated by applying a vacuum in the area of the temporary deformation.

7. Method according to any one of the preceding claims,
**characterized in that**
means for the direct or indirect electrical heating of the products received in the temporary deformation are provided on or in one of the films used.

8. Method according to claim 7,
**characterized in that**
the products respectively located in the deformation are resistance-heated and/or high-frequency-heated, wherein the step of heating can be carried out both immediately after the packaging and before the later product removal.

9. Method according to claim 7 or 8,
**characterized in that**
a support mold is used during the thermal treatment.

10. Method according to any one of the preceding claims,
**characterized in that**
the temporary deformation for the formation of troughs is realized by vacuum molds moving synchronously with respect to the film web.

11. Method according to any one of the preceding claims,
**characterized in that**
the upper and/or cover film used is made of a flexible material, in particular a material analogous or similar to the lower film.

12. Method according to claim 7 or 8,
**characterized in that**
the means for heating comprise contacts in the area of the sealed seam.

## Revendications

1. Procédé d'emballage continu de produits, en particulier de produits alimentaires présentant ou non une forme propre déjà stabilisée, tels que des produits carnés ou des produits de charcuterie, de la chair à saucisse ou des produits similaires, par entourage sur tous les côtés avec des feuilles monocouches ou multicouches susceptibles d'être amenées depuis une bande,
dans lequel
- on utilise à titre de feuilles inférieures et/ou supérieures des feuilles flexibles, déformables sans action thermique, et à retour automatique, l'une au moins des feuilles étant déformée temporairement par effet de compression, afin de réaliser un creux destiné à recevoir les produits,
- on introduit dans le creux le produit respectif mis en portion et on le fixe ici, la fixation étant réalisée par la feuille supérieure ou recouvrante associée,
- la feuille respective effectue son opération de retour par annulation de l'effet de compression et entoure au moins partiellement le produit de telle sorte que des inclusions d'air non désirées sont enlevées par expulsion des inclusions d'air, puis
- on procède à un scellement entre la feuille supérieure et la feuille inférieure.

2. Procédé selon la revendication 1,
**caractérisé en ce que**
en vue d'une désaération, on relie la feuille supérieure à la feuille inférieure dans une première étape par adhésion localisée et dans une seconde étape on la relie entièrement et de façon étanche.

3. Procédé selon la revendication 1 ou 2,
**caractérisé en ce que**
après ou pendant l'opération de désaération, on effectue une opération de rinçage et/ou de remplissage par un gaz inerte.

4. Procédé selon la revendication 1 ou 2,
**caractérisé en ce que**
on réalise l'effet de compression en générant une dépression sur le côté extérieur de la feuille inférieure.

5. Procédé selon la revendication 4,
**caractérisé en ce que**
on assiste la génération d'une dépression par une alimentation ciblée en gaz comprimé sur le côté intérieur de la feuille, et donc on assiste la mise en forme.

6. Procédé selon la revendication 3,
**caractérisé en ce que**
on accélère l'opération de rinçage et/ou de remplissage en appliquant un vide au niveau de la déformation temporaire.

7. Procédé selon l'une des revendications précédentes,
**caractérisé en ce que**
au moins sur ou dans l'une des feuilles utilisées, il existe des moyens de chauffage électrique direct ou indirect des produits reçus dans la déformation temporaire.

8. Procédé selon la revendication 7,
**caractérisé en ce que**
on fait chauffer par résistance ou par haute fréquence les produits situés dans la déformation respective, l'opération de l'échauffement pouvant se faire aussi bien directement après l'emballage qu'avant le prélèvement ultérieur des produits.

9. Procédé selon la revendication 7 ou 8,
**caractérisé en ce que**
pendant le traitement thermique, on utilise un moule de soutien.

10. Procédé selon l'une des revendications précédentes,
**caractérisé en ce que**
on réalise la déformation temporaire pour former le creux par des moules à dépression qui suivant la feuille en bande.

11. Procédé selon l'une des revendications précédentes,
**caractérisé en ce que**
la feuille supérieure et/ou recouvrante utilisée est constituée par un matériau flexible, en particulier par un matériau analogue ou similaire à la feuille inférieure.

12. Procédé selon la revendication 7 ou 8,
**caractérisé en ce que**
les moyens de chauffage comprennent des contacts au niveau du cordon de scellement.
